# FASCICULE DE BREVET EUROPEEN

(11) **EP 2 449 137 B1**
(45) Date de publication et mention de la délivrance du brevet: **23.01.2019**
(21) Numéro de dépôt: 10742185.1
(22) Date de dépôt: 02.07.2010
(51) Int. Cl.: F16C 3/02, C21D 1/06, C21D 1/18, C21D 6/00, C21D 9/28, C22C 38/06, C22C 38/08, C22C 38/40, C22C 38/52

(54) **PROCEDE D'ELABORATION D'UN ACIER MARTENSITIQUE A DURCISSEMENT MIXTE**
VERFAHREN ZUR BEHANDLUNG VON MARTENSITISCHEM STAHL MIT GEMISCHTER HÄRTUNG
METHOD FOR PRODUCING MARTENSITIC STEEL WITH MIXED HARDENING

(30) Priorité: 03.07.2009 FR 0954576
(43) Date de publication de la demande: 09.05.2012
(73) Titulaire: Safran Aircraft Engines, 75015 Paris (FR); Aubert&Duval, 75755 Paris Cedex 15 (FR)
(72) Inventeur: FERRER, Laurent, 77125 Lieusaint (FR); HERITIER, Philippe, 63100 Clermont Ferrand (FR)
(74) Mandataire: Berbinau, Pierre Jean Marie
(86) Numéro de dépôt international: PCT/FR2010/051400
(87) Numéro de publication internationale: WO 2011/001124

(56) Documents cités:
- WO-A1-2009/007562
- WO-A1-2010/007297
- FR-A1- 2 885 141
- US-A- 5 393 488

## Description

La présente invention concerne un procédé d'élaboration d'aciers martensitiques comportant des teneurs en autres métaux telles qu'ils sont aptes à être durcis par une précipitation de composés intermétalliques et de carbures, avec une teneur en Al comprise entre 0,4% et 3%.

Pour certaines applications, notamment pour des arbres de transmission de moteurs d'avion, il est nécessaire d'utiliser des aciers possédant une très haute résistance mécanique (limite élastique) jusqu'à 400°C et en même temps une bonne résistance à la rupture fragile (ténacité et ductilité élevées). Ces aciers doivent également posséder une bonne tenue en fatigue.

On connaît un tel acier martensitique selon le document US 5,393,488, qui comporte des teneurs en autres métaux telles qu'il est apte à être durci par une précipitation de composés intermétalliques et de carbures. La composition en poids d'un tel acier est la suivante : 10 à 18% de Ni, 8 à 16% de Co, 1 à 5% de Mo, 0,5 à 1.3% d'Al, 1 à 3% de Cr, moins de 0,3% de C, moins de 0,1% de Ti, le reste étant Fe.

L'inconvénient d'un tel acier est son coût élevé, dû à sa teneur importante en Co.

On connaît également un autre acier martensitique qui comporte des teneurs en autres métaux telles qu'il est apte à être durci par une précipitation de composés intermétalliques et de carbures, dont la composition est donnée dans le document FR 2,885,142 comme suit (pourcentages en poids) : 0,18 à 0,3% de C, 5 à 7% de Co, 2 à 5% de Cr, 1 à 2% d'Al, 1 à 4% de Mo+W/2, traces à 0,3% de V, traces à 0,1% de Nb, traces à 50 ppm de B, 10,5 à 15% de Ni avec Ni ≥ 7+3,5 Al, traces à 0,4% de Si, traces à 0,4% de Mn, traces à 500 ppm de Ca, traces à 500 ppm de Terres rares, traces à 500 ppm de Ti, traces à 50 ppm d'O (élaboration à partir de métal liquide) ou à 200 ppm d'O (élaboration par métallurgie des poudres), traces à 100 ppm de N, traces à 50 ppm de S, traces à 1% de Cu, traces à 200 ppm de P, le reste étant Fe.

Cet acier FR 2,885,142 possède une très haute résistance mécanique (charge à rupture pouvant aller de 2000 MPa à 2500MPa) et en même temps une très bonne résilience (supérieure à 180·10³ J/m²) ainsi qu'un bon compromis avec les autres propriétés de ténacité et de tenue en fatigue.

Cependant, les résultats d'essais en fatigue réalisés sur ce type d'aciers par les inventeurs montrent une grande dispersion des valeurs de durée de vie (correspondant au nombre de cycles conduisant à la rupture d'une éprouvette de fatigue dans cet acier) pour chaque niveau de sollicitation à déformation imposée, que ce soit pour la fatigue oligocyclique (fréquence de sollicitation de l'ordre de 1 Hz) ou la fatigue vibratoire (supérieure à 50 Hz). Ainsi les valeurs minimales, dans le sens statistique, de durée de vie en fatigue (limitant la durée de vie des pièces dans cet acier) sont encore à un niveau trop bas.

La présente invention vise à remédier à ces inconvénients.

L'invention vise à proposer un procédé d'élaboration de ce type d'aciers qui permette de réduire la dispersion en tenue à la fatigue de ce type d'acier, et également d'augmenter sa valeur moyenne en tenue à la fatigue.

Ce but est atteint grâce au fait que le procédé est tel que la température de mise en forme à chaud lors de la dernière passe de mise en forme à chaud est inférieure à la température de solubilité dans l'état solide des nitrures d'aluminium dans cet acier, et la température de traitement de chacun des éventuels traitements thermiques suivant cette dernière passe de mise en forme à chaud est inférieure à la température de solubilité dans l'état solide des nitrures d'aluminium dans cet acier.

De cette façon, après la dernière passe de mise en forme à chaud (par exemple le forgeage), le nombre de précipités indésirables de nitrures d'aluminium par unité de surface de l'acier en forme de plaquettes (ou d'aiguilles) est statistiquement négligeable, pouvant être estimé inférieur à 10⁻¹² unités par mm².

En effet, les inventeurs ont constaté que parmi les précipités de nitrures d'aluminium (AlN), ce sont ceux en forme de plaquettes (ou d'aiguilles) qui sont indésirables car ils agissent comme des sites de concentration de contraintes lorsque l'acier est soumis à des sollicitations en fatigue, et qui réduisent de ce fait l'énergie nécessaire pour amorcer les fissures en propagation. Les inventeurs ont également constaté que les précipités d'AlN indésirables se formaient lorsque l'aluminium et l'azote se recombinaient lors du refroidissement depuis une température supérieure à la température de solubilité dans l'état solide des précipités d'AlN.

Grâce au procédé selon l'invention, il ne se forme pas de précipités d'AlN indésirables lors de la dernière passe de mise en forme à chaud (par exemple un forgeage), puisque celle-ci s'effectue à une température inférieure à la température de solubilité dans l'état solide de ces précipités. De plus, les précipités d'AIN indésirables éventuellement présents dans l'acier avant cette dernière passe de mise en forme à chaud (formés au cours d'opérations antérieures qui auraient pu se faire à une température supérieure à la température de solubilité dans l'état solide des AlN) sont brisés par cette dernière mise en forme à chaud en morceaux dont les dimensions dans les trois directions spatiales sont du même ordre de grandeur et qui sont espacés les uns des autres. Ces morceaux sont ainsi peu susceptibles d'être des sites d'amorce de fissures qui amèneraient à la ruine prématurée de l'acier.

Par conséquent, la proportion de précipités d'AlN indésirables (précipités en forme de plaquettes ou d'aiguilles) à l'issue la dernière passe de mise en forme à chaud est négligeable, de telle sorte que ces précipités ne peuvent plus servir de lieu d'amorce de fissures. De plus, il ne se reforme pas de ces précipités d'AlN indésirables après cette dernière passe de mise en forme à chaud, puisque l'acier ne repasse plus au dessus de la température de solubilité dans l'état solide des AlN lors d'éventuels traitements thermiques ultérieures. Il en résulte donc une augmentation des valeurs minimales de durée de vie en fatigue, et également de la moyenne des durées de vie en fatigue.

L'invention concerne également un acier martensitique comportant des teneurs en autres métaux telles qu'il est apte à être durci par une précipitation de composés intermétalliques et de carbures, avec une teneur en Al comprise entre 0,4% et 3%.

Selon l'invention, si la dernière passe de mise en forme à chaud se fait en dessous de la température de solubilité dans l'état solide des nitrures d'Aluminium et que la température de traitement de chacun des éventuels traitements thermiques suivant cette dernière passe de mise en forme à chaud est inférieure à cette température de solubilité, le nombre par unité de surface de l'acier de ces précipités dont la forme est indésirable (plaquettes ou aiguilles) est inférieur à 10⁻¹² statistiquement. De ce fait, la dispersion des résultats en nombre de cycle en fatigue sera réduite, ce qui a pour conséquence une plus grande durée de vie d'une pièce en cet acier.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 compare des courbes de durée de vie en fatigue pour un acier selon l'invention et un acier selon l'art antérieur,
- la figure 2 montre une courbe de sollicitation en fatigue,
- la figure 3 est une photographie au microscope électronique à balayage d'un précipité secondaire dans un acier selon l'art antérieur,
- la figure 4 est une photographie au microscope électronique à balayage d'un précipité primaire dans un acier selon l'invention.

On considère les aciers martensitiques à durcissement mixte avec une teneur en Al comprise entre 0,4% et 3%. C'est leur teneur en Al et leurs teneurs en autres métaux qui permet à ces aciers d'être durcis par une précipitation de composés intermétalliques et de carbures (durcissement mixte).

Des essais en fatigue sur des éprouvettes de test de ces aciers élaborés selon l'art antérieur ont montré une grande dispersion dans les résultats de ces essais, c'est-à-dire que pour une contrainte donnée de sollicitation en fatigue, la durée de vie varie sur une plage large.

La largeur de cette plage, spécifiquement les valeurs basses de cette plage, est due à la présence de ces précipités indésirables qui nécessitent moins d'énergie pour amorcer les fissures en fatigue, et conduit à la rupture prématurée de l'acier.

Du fait de sa composition chimique, l'acier contient des précipités primaires d'AlN qui se forment pendant la solidification du métal, à température élevée, lorsque l'acier est encore en phase pâteuse (c'est à dire dans les deux états mélangés solide et liquide de l'acier). Leur quantité est inférieure à 10⁻² unités par mm². Cette précipitation primaire se fait sous la forme de précipités dont les dimensions dans les trois directions spatiales sont du même ordre de grandeur (c'est-à-dire que ces précipités ont une forme sensiblement sphérique) et dont la taille ne dépassent pas 50 µm. L'amorçage de fissures à partir de ces précipités d'AlN primaires nécessite plus d'énergie (qu'à partir des précipités secondaires, voir ci-dessous) et ne génèrent donc pas de valeurs de durée de vie en fatigue minimales.

Les inventeurs ont remarqué que l'acier selon l'art antérieur contient également des précipités d'AlN distincts des précipités primaires, qui sont appelés précipités secondaires. Ces précipités secondaires sont présents dans une plus faible proportion (inférieure à 10⁻² unités par mm²) que les précipités primaires. Ce sont ces précipités secondaires qui sont responsables de la rupture prématurée de l'acier. Les inventeurs ont constaté que les précipités secondaires présentent une forme indésirable de plaquette (ou d'aiguille) se caractérisant par leur dimensions dans les trois directions :
a) la plus petite dimension étant inférieure à un vingtième de la plus grande dimension et
b) la plus grande dimension étant supérieure à 10µm.

Ces précipités secondaires agissent comme des sites de concentration de contraintes, et donc comme des lieux privilégiés d'amorce de fissures, puisque des fissures nécessitent moins d'énergie pour se former sur ces précipités secondaires que sur les précipités primaires. Des fissures se forment donc prématurément sur les précipités secondaires, et conduisent à une diminution de la durée de vie de la pièce en acier (ce qui correspond aux valeurs basses de la plage de résultats des essais).

Les inventeurs ont également constaté que dans l'acier solide, il existe une seconde température de solubilité des nitrures d'Aluminium AlN (fonction de la composition chimique), appelée température de solubilité dans l'état solide, et que les précipités d'AlN secondaires se forment pendant le refroidissement de l'acier depuis une température supérieure à cette température de solubilité dans l'état solide des précipités d'AlN dans l'acier. En effet, lorsque l'acier passe au dessus de cette température de solubilité, une faible proportion des précipités d'AlN primaires se dissolvent. Puis, lorsque la température repasse en dessous de cette température pendant le refroidissement de l'acier, l'aluminium et l'azote dissous se recombinent en des précipités d'AlN secondaires.

Par exemple, cette température de solubilité dans l'état solide est égale à 1025°C dans le cas d'un acier dont la composition est couverte par le brevet FR 2,885,142 et est donnée plus haut.

Ainsi, si la température de forgeage de la dernière passe de mise en forme à chaud est inférieure à la température de solubilité dans l'état solide des précipités d'AlN dans l'acier solide, alors les précipités d'AlN restent en l'état (l'aluminium et l'azote ne se dissolvent pas). Il ne se forme donc pas de précipités d'AlN secondaires.

Par ailleurs, les précipités d'AlN secondaires éventuellement présents avant la dernière passe de forgeage (qui pourraient résulter de traitements thermiques antérieurs réalisés au dessus de la température de solubilité dans l'état solide) ont tendance d'une part à être brisés par l'opération de forgeage en des précipités plus petits, dont la forme présente des dimensions équivalentes dans les trois directions spatiales (à l'inverse d'une forme indésirable (en plaquette ou en aiguille)), et d'autre part à être espacés les uns des autres. Par conséquent, l'opération de mise en forme à chaud en dessous de la température de solubilité dans l'état solide des précipités d'AlN transforme les précipités secondaires nocifs en des précipités plus similaires à des précipités primaires, et qui sont donc moins préjudiciables pour la durée de vie en fatigue de l'acier.

Les inventeurs ont réalisés des essais sur des aciers élaborés avec le procédé selon l'invention, c'est-à-dire avec une température de mise en forme à chaud de la dernière passe de mise en forme à chaud inférieure à la température de solubilité dans l'état solide des précipités d'AlN dans l'acier (et pas de traitement thermique ultérieur au dessus de cette température), et les résultats de ces essais sont présentés ci-dessous.

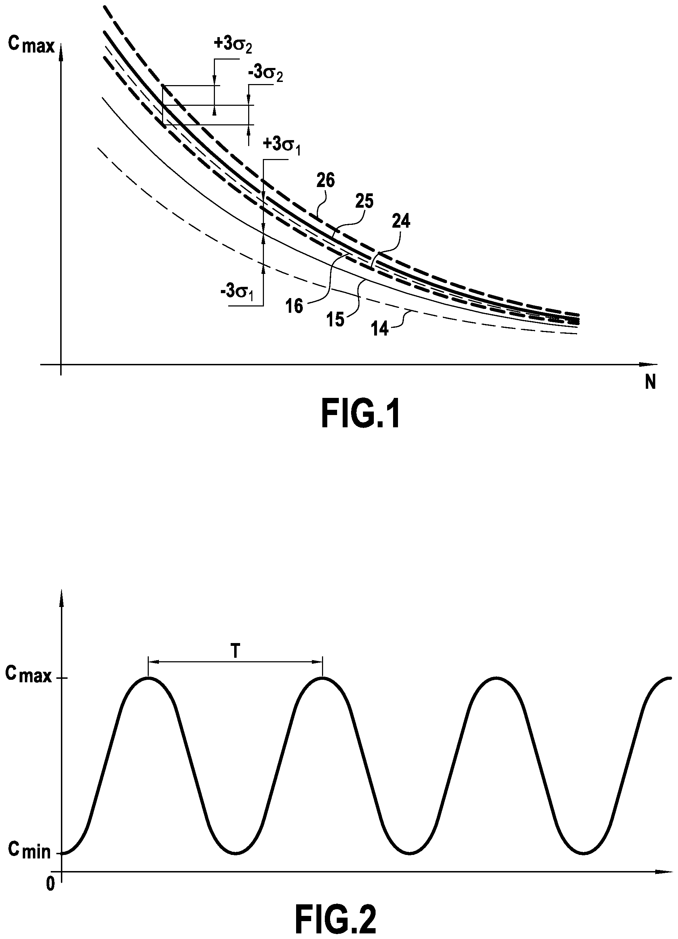

La figure 1 montre qualitativement les améliorations apportées par le procédé selon l'invention. On obtient expérimentalement la valeur du nombre N de cycles à rupture nécessaire pour rompre une éprouvette en acier soumise à une sollicitation cyclique en traction en fonction de la pseudo contrainte alternée C (il s'agit de la contrainte subie par l'éprouvette sous déformation imposée, selon la norme DMC0401 de Snecma utilisée pour ces essais).

Une telle sollicitation cyclique est représentée schématiquement en figure 2. La période T représente un cycle. La contrainte évolue entre une valeur maximale Cₘₐₓ et une valeur minimale Cₘᵢₙ.

En testant en fatigue un nombre statistiquement suffisant d'éprouvettes, les inventeurs ont obtenu des points N=f(C) à partir desquels ils ont tracé une courbe statistique moyenne C-N (contrainte Cₘₐₓ en fonction du nombre N de cycles de fatigue). Les écarts types sur les contraintes sont ensuite calculés pour un nombre de cycles donné.

Sur la figure 1, la première courbe 15 (en trait fin) est (schématiquement) la courbe moyenne obtenue pour un acier élaboré selon l'art antérieur. Cette première courbe moyenne C-N est entourée par deux courbes 16 et 14 en trait fin pointillé. Ces courbes 16 et 14 sont situées respectivement à une distance de +3 σ₁ et -3 σ₁ de la première courbe 15, σ₁ étant l'écart-type de la distribution des points expérimentaux obtenus lors de ces essais en fatigue, et ±3σ₁ correspond en statistique à un intervalle de confiance de 99,7%. La distance entre ces deux courbes 14 et 16 en trait pointillé est donc une mesure de la dispersion des résultats. La courbe 14 est le facteur limitant pour le dimensionnement d'une pièce.

Sur la figure 1, la deuxième courbe 25 (en trait épais) est (schématiquement) la courbe moyenne obtenue à partir des résultats d'essais en fatigue effectués sur un acier élaboré selon l'invention sous une sollicitation selon la figure 2. Cette deuxième courbe moyenne C-N est entourée par deux courbes 26 et 24 en trait épais pointillé, situées respectivement à une distance de +3 σ₂ et -3 σ₂ de la deuxième courbe 25, σ₂ étant l'écart-type de la distribution des points expérimentaux obtenus lors de ces essais en fatigue. La courbe 24 est le facteur limitant pour le dimensionnement d'une pièce.

On note que la deuxième courbe 25 est située au dessus de la première courbe 15, ce qui signifie que sous une sollicitation en fatigue à un niveau de contrainte Cₘₐₓ, les éprouvettes en acier élaboré selon l'invention se rompent en moyenne à un nombre N de cycles plus élevé que celui où les éprouvettes en acier selon l'art antérieur se rompent.

De plus, la distance entre les deux courbes 26 et 24 en trait épais pointillé est plus faible que la distance entre les deux courbes 16 et 14 en trait fin pointillé, ce qui signifie que la dispersion en tenue à la fatigue de l'acier élaboré selon l'invention est plus faible que celle d'un acier selon l'art antérieur.

Ainsi, pour une contrainte donnée, la courbe 14 relative à un acier fabriqué selon l'art antérieur donne de plus faibles valeurs de durée de vie de la pièce que la courbe 24 relative à un acier fabriqué selon l'invention.

La figure 1 illustre les résultats expérimentaux résumés dans les tableaux 1 et 2 ci-dessous.

Le tableau 1 donne les résultats pour une sollicitation en fatigue oligocyclique selon la figure 2 avec une contrainte Cₘᵢₙ nulle, à différentes températures : 20°C, 200°C, et 400°C. Une fatigue oligocyclique signifie que la fréquence de sollicitation est de l'ordre de 1 Hz (la fréquence étant définie comme le nombre de périodes T par seconde).

On note que pour une valeur donnée du nombre N de cycles, la valeur moyenne de contrainte en fatigue nécessaire pour rompre un acier selon l'invention est supérieure à la valeur moyenne M de contrainte en fatigue (fixée à 100%) nécessaire pour rompre un acier selon l'art antérieur. La dispersion (=6 σ) des résultats à ce nombre N de cycles pour un acier selon l'invention est inférieure à la dispersion des résultats pour un acier selon l'art antérieur (dispersions exprimées en pourcentage de la valeur moyenne M).

**Tableau 1**

| Conditions d'essai en fatigue oligocyclique | | Acier selon l'art antérieur | | Acier élaboré selon l'invention | |
|---|---|---|---|---|---|
| N | Température | C | Dispersion | C | Dispersion |
| 10⁵ | 20°C | 100% M | 40% M | 125% M | 20% M |
| 10⁵ | 200°C | 100% M | 30% M | 137% M | 15% M |
| 3·10⁴ | 400°C | 100% M | 40% M | 112% M | 15% M |

Le tableau 2 donne les résultats pour une sollicitation en fatigue vibratoire, c'est-à-dire à une fréquence de 80 Hz environ, à 200°C. La sollicitation est identique à celle de la figure 2 avec une contrainte minimale Cₘᵢₙ non nulle (fraction de la contrainte maximale Cₘₐₓ).

On note que pour une valeur donnée du nombre N de cycles, la valeur moyenne de contrainte en fatigue nécessaire pour rompre un acier selon l'invention est supérieure à la valeur moyenne M de contrainte en fatigue nécessaire pour rompre un acier selon l'art antérieur. La dispersion des résultats à ce nombre N de cycles pour un acier selon l'invention est inférieure à la dispersion des résultats pour un acier selon l'art antérieur.

On note que la valeur minimale Cₘᵢₙ n'a que peu d'influence sur les résultats.

**Tableau 2**

| Conditions d'essai en fatigue vibratoire | | | Acier selon l'art antérieur | | Acier élaboré selon l'invention | |
|---|---|---|---|---|---|---|
| N | Température | Cₘᵢₙ | C | Dispersion | C | Dispersion |
| 4·10° | 200°C | C_{max/}20 | 100%=M | 30% M | 120% M | 12% M |
| 4·10° | 200°C | Cₘₐₓ/2 | 100%=M | 30% M | 126% M | 14% M |

Les résultats de ces essais montrent donc que ce sont bien les précipités d'AlN secondaires dans l'acier selon l'art antérieur, formés lors de la dernière passe de mise en forme à chaud à une température au-delà de la température de solubilité dans l'état solide de ces précipités dans l'acier, qui sont responsables des valeurs basses de durée de vie en fatigue de cet acier.

Les observations au MEB (microscope électronique à balayage) effectuées par les inventeurs sur de nombreuses éprouvettes d'acier selon l'art antérieur et selon l'invention corroborent ces conclusions.

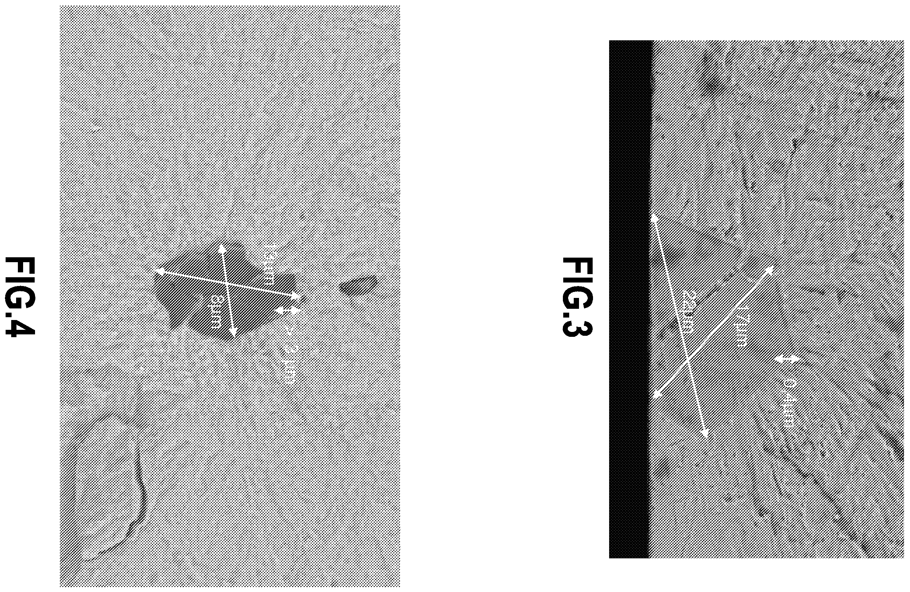

La figure 3 est une fractographie au MEB de la surface de fracture d'une éprouvette en acier selon l'art antérieur. On y distingue un précipité secondaire. Ce précipité a la forme d'une plaquette dont les dimensions, indiquées sur la figure, sont 17 µm et 22 µm pour une épaisseur de 0,4 µm. Ces précipités secondaires sont présents en quantité importante dans les aciers selon l'art antérieur, et pratiquement absents des aciers selon l'invention.

La figure 4 est une fractographie au MEB de la surface de fracture d'une éprouvette en acier selon l'invention. On y distingue un précipité primaire. Ce précipité a une forme sensiblement tridimensionnelle, et ses dimensions, indiquées sur la figure, sont du même ordre de grandeur : 13 µm × 8 µm × 3 µm.
outre la température de mise en forme à chaud de chacune des passes de mise en forme à chaud précédant la dernière passe de mise en forme à chaud est inférieure à cette température de solubilité dans l'état solide.

Ainsi, il ne se forme sensiblement pas de précipités secondaires nocifs durant tout le procédé d'élaboration de l'acier.

Par exemple, la teneur en Al de l'acier est comprise entre 0,5% et 2%.

Dans l'acier, la teneur en C est inférieure à 0,4%, la teneur en Cr est comprise entre 0,5% et 7%, la teneur en Ni est comprise entre 6% et 18%, la teneur en Co est comprise entre 4% et 18%.

Une pièce peut être fabriquée en un acier martensitique selon l'invention. Par exemple, cette pièce est un arbre de transmission de moteur, notamment de moteur d'avion.

## Revendications

1. Procédé d'élaboration d'un acier martensitique comportant des teneurs en autres métaux telles qu'il est apte à être durci par une précipitation de composés intermétalliques et de carbures, avec une teneur en Al comprise entre 0,4% et 3%, une teneur en C inférieure à 0,4%, une teneur en Cr comprise entre 0,5% et 7%, une teneur en Ni comprise entre 6% et 18%, une teneur en Co comprise entre 4% et 18%, **caractérisé en ce que** la température de mise en forme à chaud lors de la dernière passe de mise en forme à chaud est inférieure à la température de solubilité dans l'état solide des nitrures d'aluminium dans ledit acier, la température de mise en forme à chaud de chacune des passes de mise en forme à chaud précédant la dernière passe de mise en forme à chaud est inférieure à la température de solubilité dans l'état solide des nitrures d'aluminium dans ledit acier, et la température de traitement de chacun des éventuels traitements thermiques suivant cette dernière passe de mise en forme à chaud est inférieure à la température de solubilité dans l'état solide des nitrures d'aluminium dans ledit acier.

2. Procédé d'élaboration selon la revendication 1 **caractérisé en ce que** la teneur en Al dudit acier est comprise entre 0,5% et 2%.

3. Acier martensitique comportant des teneurs en autres métaux telles qu'il est apte à être durci par une précipitation de composés intermétalliques et de carbures, avec une teneur en Al comprise entre 0,4% et 3%, une teneur en C inférieure à 0,4%, une teneur en Cr comprise entre 0,5% et 7%, une teneur en Ni comprise entre 6% et 18%, une teneur en Co comprise entre 4% et 18%, **caractérisé en ce que** le nombre par unité de surface dudit acier de précipités de nitrures d'aluminium dont la forme est telle que la plus faible dimension dudit précipité est au plus un vingtième de la plus grande dimension dudit précipité et que cette plus grande dimension est supérieure à 10 µm, est inférieur à 10⁻¹² statistiquement.

4. Acier martensitique selon la revendication 3 **caractérisé en ce que** la teneur en Al dudit acier est comprise entre 0,5% et 2%.

5. Pièce en acier martensitique selon la revendication 3 ou 4.

6. Arbre de transmission en acier martensitique de moteur d'avion selon la revendication 3 ou 4.

## Patentansprüche

1. Verfahren zur Herstellung eines martensitischen Stahls mit derartigen Gehalten an anderen Metallen, dass er geeignet ist, durch eine Ausscheidung von intermetallischen Verbindungen und Carbiden gehärtet zu werden, mit einem Gehalt an Al im Bereich zwischen 0,4 % und 3 %, einem Gehalt an C von weniger als 0,4 %, einem Gehalt an Cr im Bereich zwischen 0,5 % und 7 %, einem Gehalt an Ni im Bereich zwischen 6 % und 18 %, einem Gehalt an Co im Bereich zwischen 4 % und 18 %, **dadurch gekennzeichnet, dass** die Warmformungstemperatur während des letzten Warmformungsdurchgangs niedriger ist als die Löslichkeitstemperatur im festen Zustand der Aluminiumnitride in dem Stahl, die Warmformungstemperatur eines jeden der Warmformungsdurchgänge, die dem letzten Warmformungsdurchgang vorangehen, niedriger ist als die Löslichkeitstemperatur im festen Zustand der Aluminiumnitride in dem Stahl und die Behandlungstemperatur einer jeden der möglichen Wärmebehandlungen, welche auf diesen letzten Warmformungsdurchgang folgen, niedriger ist als die Löslichkeitstemperatur im festen Zustand der Aluminiumnitride in dem Stahl.

2. Herstellungsverfahren nach Anspruch 1, **dadurch gekennzeichnet, dass** der Al-Gehalt des Stahls im Bereich zwischen 0,5 % und 2 % liegt.

3. Martensitischer Stahl mit derartigen Gehalten an anderen Metallen, dass er geeignet ist, durch eine Ausscheidung von intermetallischen Verbindungen und Carbiden gehärtet zu werden, mit einem Gehalt an Al im Bereich zwischen 0,4 % und 3 %, einem Gehalt an C von weniger als 0,4 %, einem Gehalt an Cr im Bereich zwischen 0,5 % und 7 %, einem Gehalt an Ni im Bereich zwischen 6 % und 18 %, einem Gehalt an Co im Bereich zwischen 4 % und 18 %, **dadurch gekennzeichnet, dass** die Anzahl von Aluminiumnitridniederschlägen pro Flächeneinheit des Stahls, deren Form derart ist, dass die kleinste Abmessung des Niederschlags höchstens ein Zwanzigstel der größten Abmessung des Niederschlags ist und dass diese größte Abmessung größer als 10 µm ist, statistisch kleiner als 10⁻¹² ist.

4. Martensitischer Stahl nach Anspruch 3, **dadurch gekennzeichnet, dass** der Al-Gehalt des Stahls im Bereich zwischen 0,5 % und 2 % liegt.

5. Teil aus martensitischem Stahl nach Anspruch 3 oder 4.

6. Übertragungswelle aus martensitischem Stahl eines Flugzeugtriebwerks nach Anspruch 3 oder 4.

## Claims

1. A method for producing martensitic steel that comprises a content of other metals such that the steel can be hardened by an intermetallic compound and carbide precipitation, with an Al content of between 0.4% and 3%, a C content less than 0.4%, a Cr content between 0.5% and 7%, a Ni content between 6% and 18%, a Co content between 4% and 18%, **characterized in that** the heat shaping temperature for the last heat shaping pass is less than the solid-state solubility temperature of the aluminum nitrides in said steel, the heat shaping temperature of each of the heat shaping passes preceding the last heat shaping pass is less than the solid-state solubility temperature of the aluminum nitrides in said steel, and the heat treatment temperature for each optional heat treatment after said last heat shaping pass is less than the solid-state solubility temperature of the aluminum nitrides in said steel.

2. The production method according to claim 1, **characterized in that** the Al content of said steel is between 0.5% and 2%.

3. A martensitic steel that comprises a content of other metals such that the steel can be hardened by an intermetallic compound and carbide precipitation, with an Al content of between 0.4% and 3%, a C content less than 0.4%, a Cr content between 0.5% and 7%, a Ni content between 6% and 18%, a Co content between 4% and 18%, **characterized in that** the number of aluminum nitrides per surface unit of said steel whereof the shape is such that the smallest dimension of said precipitate is at most one twentieth of the largest dimension of said precipitate and that largest dimension is greater than 10 µm, is statistically less than 10⁻¹².

4. The martensitic steel according to claim 3, **characterized in that** the Al content of said steel is between 0.5% and 2%.

5. A piece made from the martensitic steel according to claim 3 or 4.

6. An airplane engine transmission shaft made from the martensitic steel according to claim 3 or 4.
